# EUROPEAN PATENT APPLICATION

(11) **EP 3 530 775 A1**
(43) Date of publication of application: **28.08.2019**
(21) Application number: 17856203.9
(22) Date of filing: 27.09.2017
(51) Int. Cl.: C23F 11/12, C10G 75/02, C10L 10/04

(54) **METAL CORROSION SUPPRESSING METHOD**

(30) Priority: 27.09.2016 JP 2016187826
(71) Applicant: Kuraray Co., Ltd., Okayama 710-0801 (JP)
(72) Inventor: SAITOU, Yuusuke, Kamisu-shi Ibaraki 314-0197 (JP); SHIMIZU, Masaki, Kamisu-shi Ibaraki 314-0197 (JP); TSURUTA, Takuo, Kamisu-shi Ibaraki 314-0197 (JP)
(74) Representative: D Young & Co LLP
(86) International application number: PCT/JP2017/034912
(87) International publication number: WO 2018/062254

(57) **Abstract**

A method for suppressing metal corrosion attributable to a compound having an SH structure contained in a hydrocarbon, including adding at least one aldehyde selected from the group consisting of a monoaldehyde having 4 or more carbon atoms and a dialdehyde having 3 or more carbon atoms, to the hydrocarbon.

## Description

### Technical field

The present invention relates to a method for suppressing metal corrosion.

### Background Art

Hydrogen sulfide that is frequently contained in hydrocarbons, for example, fossil fuels, refined petroleum products, and bio-fuels, such as natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil, is problematized as a factor causing corrosion of a metal in contact with the hydrocarbon.

The known methods for removing hydrogen sulfide contained in a hydrocarbon include a method of adding a hexahydrotriazine compound, such as 1,3,5-tris(2-hydroxyethyl)-hexahydro-1,3,5-triazine, or an aldehyde, such as formaldehyde, glyoxal, glutaraldehyde, 3-methylglutaraldehyde, 1,9-nonanedial, and 2-methyl-1,8-octanedial, to the hydrocarbon (see PTLs 1 to 9).

### Citation List

### Patent Literatures

PTL 1: U.S. Patent No. 1,991,765
PTL 2: U.S. Patent No. 4,680,127
PTL 3: U.S. Patent No. 5,284,635
PTL 4: WO 2011/087540
PTL 5: JP 2012-525964 A
PTL 6: JP 2013-544305 A
PTL 7: US 2013/090271 A
PTL 8: US 2013/089460 A
PTL 9: WO 2015/141535

### Summary of Invention

### Technical Problem

The addition of a hexahydrotriazine compound or an aldehyde to a hydrocarbon achieves removal or reduction of hydrogen sulfide contained in the hydrocarbon through reaction of the compound and hydrogen sulfide. As a result of the investigations made by the present inventors, however, it has been found that even the hydrocarbon, from which hydrogen sulfide has been removed with the compound, may still cause metal corrosion in some cases, and an organic compound having a thiol group newly formed from the reaction product of a hexahydrotriazine compound or a certain type of an aldehyde and hydrogen sulfide is highly possibly a part of the factors causing the metal corrosion.

An object of the present invention is to provide a method for suppressing metal corrosion by suppressing further generation of a compound having an SH structure after the removal or reduction of hydrogen sulfide contained in a hydrocarbon.

### Solution to Problem

The present invention includes the following.
[1] A method for suppressing metal corrosion attributable to a compound having an SH structure contained in a hydrocarbon, including adding at least one aldehyde selected from the group consisting of a monoaldehyde having 4 or more carbon atoms and a dialdehyde having 3 or more carbon atoms, to the hydrocarbon.
[2] The method according to the item [1], wherein the aldehyde is a dialdehyde having 3 or more carbon atoms.
[3] The method according to the item [1], wherein the aldehyde is at least one selected from the group consisting of 3-methylglutaraldehyde, 1,9-nonanedial, and 2-methyl-1,8-octanedial.
[4] The method according to any one of the items [1] to [3], wherein the hydrocarbon is at least one selected from the group consisting of natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil.
[5] The method according to any one of the items [1] to [4], wherein the compound having an SH structure is an organic compound having a thiol group.
[6] Use of at least one aldehyde selected from the group consisting of a monoaldehyde having 4 or more carbon atoms and a dialdehyde having 3 or more carbon atoms, for suppressing metal corrosion attributable to a compound having an SH structure contained in a hydrocarbon.
[7] The use according to the item [6], wherein the aldehyde is a dialdehyde having 3 or more carbon atoms.
[8] The use according to the item [6], wherein the aldehyde is at least one selected from the group consisting of 3-methylglutaraldehyde, 1,9-nonanedial, and 2-methyl-1,8-octanedial.
[9] The use according to any one of the items [6] to [8], wherein the hydrocarbon is at least one selected from the group consisting of natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil.
[10] The use according to any one of the items [6] to [9], wherein the compound having an SH structure is an organic compound having a thiol group.
[11] An inhibitor for metal corrosion attributable to a compound having an SH structure contained in a hydrocarbon, containing at least one aldehyde selected from the group consisting of a monoaldehyde having 4 or more carbon atoms and a dialdehyde having 3 or more carbon atoms.
[12] The inhibitor according to the item [11], wherein the aldehyde is a dialdehyde having 3 or more carbon atoms.
[13] The inhibitor according to the item [11], wherein the aldehyde is at least one selected from the group consisting of 3-methylglutaraldehyde, 1,9-nonanedial, and 2-methyl-1,8-octanedial.
[14] The inhibitor according to any one of the items [11] to [13], wherein the hydrocarbon is at least one selected from the group consisting of natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil.
[15] The inhibitor according to any one of the items [11] to [14], wherein the compound having an SH structure is an organic compound having a thiol group.

### Advantageous Effects of Invention

In the method, the use, and the inhibitor according to the present invention, the use of at least one aldehyde selected from the group consisting of a monoaldehyde having 4 or more carbon atoms and a dialdehyde having 3 or more carbon atoms can suppress further generation of a compound having an SH structure after the removal or reduction of hydrogen sulfide contained in a hydrocarbon, thereby suppressing metal corrosion.

### Brief Description of Drawing

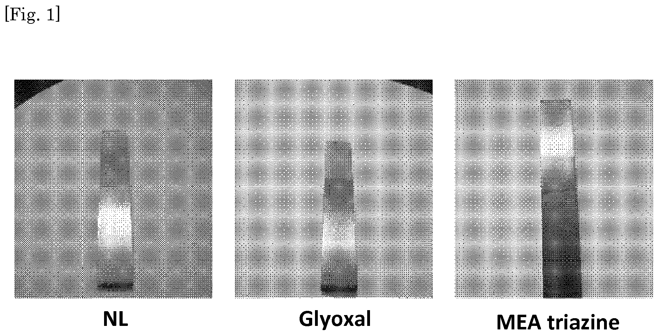

Fig. 1 is a photograph showing the copper sheets after the copper sheet corrosion test in the cases using a mixture of 1,9-nonanedial and 2-methyl-1,8-octanedial (shown as NL/MOL), glyoxal, and 1,3,5-tris(2-hydroxyethyl)-hexahydro-1,3,5-triazine (shown as MEA triazine).

### Description of Embodiments

The "hydrocarbon" referred in the description herein may be in a gaseous state, a liquid state, a solid state, or a mixed state thereof, typical examples of which include a hydrocarbon, for example, a fossil fuel, a refined petroleum product, and a bio-fuel, such as natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil, but the hydrocarbon herein is not limited to these examples.

The "compound having an SH structure" referred in the description herein means a compound having an -SH moiety in the structure thereof, and may include hydrogen sulfide and an organic compound having a thiol group.

The "organic compound having a thiol group" referred in the description herein means a compound having a C-SH moiety in the structure thereof. Examples of the organic compound having a thiol group include a mercaptan compound, such as methylmercaptan, ethylmercaptan, propylmercaptan, isopropylmercaptan, n-butylmercaptan, isobutylmercaptan, sec-butylmercaptan, tert-butylmercaptan, n-amylmercaptan, phenylmercaptan, and benzylmercaptan.

The organic compound having a thiol group may further include an organic compound having a thiol group that is newly formed from a reaction product of a hexahydrotriazine compound or a certain type of an aldehyde and hydrogen sulfide.

The mechanism of the generation of the organic compound having a thiol group from a reaction product of a hexahydrotriazine compound and hydrogen sulfide is not necessarily clear, but the mechanism shown by the following chemical reaction formula (1) can be estimated.

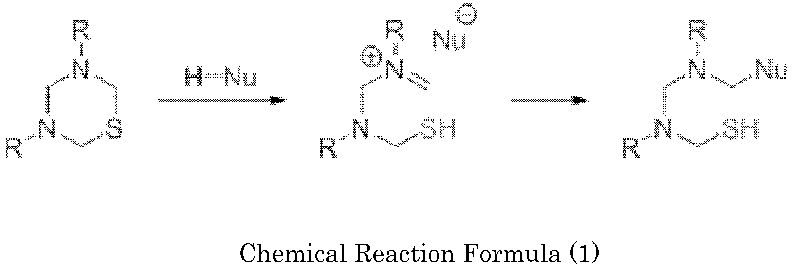

In the chemical reaction formula (1), R represents a hydrogen atom or an organic group, and Nu represents a nucleophilic agent, such as OH. In the case where the hexahydrotriazine compound is 1,3,5-tris(2-hydroxyethyl)-hexahydro-1,3,5-triazine, R represents -CH₂CH₂OH or the like.

The reaction product of the hexahydrotriazine compound and hydrogen sulfide has such a structure that typically one or two of the three >N-R groups of the hexahydrotriazine compound is replaced by >S, and the structure having all the three >N-R groups replaced by >S rarely occurs.

The hexahydrotriazine compound is frequently used in the form of an aqueous solution, and the hydrocarbon frequently contains water mixed therein. Therefore, the hydrocarbon having the hexahydrotriazine compound added thereto for reducing or removing hydrogen sulfide generally contains water present therein.

In the case where water or another compound functioning as a nucleophilic agent is present, it is considered that the ring-opening reaction of the reaction product of the hexahydrotriazine compound and hydrogen sulfide is accelerated as shown in the chemical reaction formula (1), and the organic compound having a thiol group is generated.

It is considered that an organic compound having a thiol group is also generated from a reaction product of a certain type of an aldehyde, such as glyoxal, and hydrogen sulfide. The mechanism thereof is not necessarily clear, but the mechanism shown by the following chemical reaction formula (2) can be estimated for glyoxal.

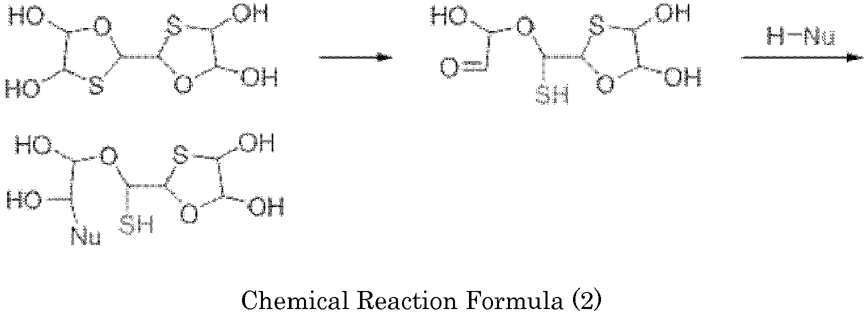

In the chemical reaction formula (2), Nu represents a nucleophilic agent, such as OH.

It has been known that the reaction product of glyoxal and hydrogen sulfide has the structure shown as the starting substance in the chemical reaction formula (2).

As similar to the hexahydrotriazine compound, glyoxal is frequently used in the form of an aqueous solution, and the hydrocarbon frequently contains water mixed therein. Therefore, the hydrocarbon having glyoxal added thereto for reducing or removing hydrogen sulfide generally contains water present therein.

In the case where water or another compound functioning as a nucleophilic agent is present, it is considered that the ring-opening reaction of the reaction product of glyoxal and hydrogen sulfide is accelerated as shown in the chemical reaction formula (2), and the organic compound having a thiol group is generated.

On the other hand, it is considered that the at least one aldehyde selected from the group consisting of a monoaldehyde having 4 or more carbon atoms and a dialdehyde having 3 or more carbon atoms used in the present invention forms the compounds represented by the following general formulae (A) to (C) through reaction with hydrogen sulfide.

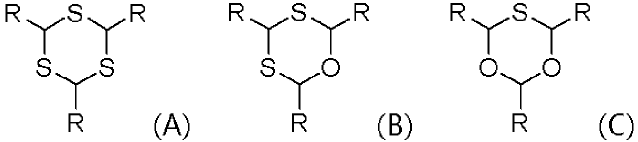

In the general formulae (A) to (C), R represents an organic group. Three groups represented by R may be the same as or different from each other, and two or more groups represented by R may be bonded to each other.

The compound represented by the general formulae (A) to (C) is relatively stable against a nucleophilic agent due to the structure thereof, and is considered to have a possibility that the compound does not readily undergo ring-opening reaction even though water is present in the hydrocarbon.

It is considered accordingly that in the case where hydrogen sulfide is reduced or removed by the method, the use, and the inhibitor of the present invention, further generation of a compound having an SH structure can be suppressed.

The monoaldehyde having 4 or more carbon atoms used in the present invention is not particularly limited, and examples thereof include butanal, pentanal, hexanal, heptanal, octanal, nonanal, decanal, benzaldehyde, and senecioaldehyde. The number of carbon atoms of the monoaldehyde is preferably 16 or less.

The dialdehyde having 3 or more carbon atoms used in the present invention is not particularly limited, and examples thereof include malondialdehyde, succinaldehyde, glutaraldehyde, methylglutaraldehyde, 1,6-hexanedial, ethylpentanedial, 1,7-heptanedial, methylhexanedial, 1,8-octanedial, methylheptanedial, dimethylhexanedial, ethylhexanedial, 1,9-nonanedial, methyloctanedial, ethylheptanedial, 1,10-decanedial, dimethyloctanedial, ethyloctanedial, dodecanedial, hexadecanedial, 1,2-cyclohexanedicarboaldehyde, 1,3-cyclohexanedicarboaldehyde, 1,4-cyclohexanedicarboaldehyde, 1,2-cyclooctanedicarboaldehyde, 1,3-cyclooctanedicarboaldehyde, 1,4-cyclooctanedicarboaldehyde, and 1,5-cyclooctanedicarboaldehyde.

The aldehyde used in the present invention is preferably a dialdehyde having 3 or more carbon atoms.

From the standpoint of the low toxicity, the biodegradability, the handling safety, the heat resistance, the low metal corrosiveness of the aldehyde, and the like, a dialdehyde having from 6 to 16 carbon atoms is more preferred, and at least one compound selected from the group consisting of 3-methylglutaraldehyde, 1,9-nonanedial and 2-methyl-1,8-octanedial is further preferred.

From the standpoint of the high hydrophobicity avoiding the use of water as a solvent, at least one compound selected from the group consisting of 1,9-nonanedial and 2-methyl-1,8-octanedial is most preferred.

The aldehydes may be used alone or as a combination of two or more kinds thereof.

In the case where at least one of 1,9-nonanedial and 2-methyl-1,8-octanedial is used as the aldehyde, 1,9-nonanedial or 2-methyl-1,8-octanedial may be used alone, and from the standpoint of the industrial availability, a mixture of 1,9-nonanedial and 2-methyl-1,8-octanedial is preferably used. The mixing ratio of the mixture of 1,9-nonanedial and 2-methyl-1,8-octanedial is not particularly limited, and the mass ratio of 1,9-nonanedial/2-methyl-1,8-octanedial is generally preferably from 99/1 to 1/99, more preferably from 95/5 to 5/95, further preferably from 90/10 to 45/55, and particularly preferably from 90/10 to 55/45.

The inhibitor of the present invention may contain, in addition to the aldehyde, a solvent and the like, such as toluene, xylene, heavy aromatic naphtha, petroleum distillate, methanol, ethanol, isopropyl alcohol, ethylene glycol, polyethylene glycol, and ethyl acetate.

The solvents may be used alone or as a combination of two or more kinds thereof.

In the method and the use of the present invention, the aldehyde is added to a hydrocarbon. The method of adding is not particularly limited, and the aldehyde may be added according to a known method, such as injection to a storage tank of the hydrocarbon, a pipeline for transportation thereof, a distillation column for refining thereof, and the like. The amount of the aldehyde added is not particularly limited, and is preferably such an amount that can sufficiently remove hydrogen sulfide. The temperature, at which the aldehyde is added to the hydrocarbon, is preferably from 0 to 200°C, and more preferably from 20 to 120°C.

### Examples

The present invention will be described in more detail with reference to examples and the like below, but the present invention is not limited to the examples.

### <Production Example>

### [Production of Mixture of 1,9-Nonanedial (NL) and 2-Methyl-1,8-octanedial (MOL)]

A mixture of 1,9-nonanedial (hereinafter referred to as NL) and 2-methyl-1,8-octanedial (hereinafter referred to as MOL) was produced according to the method described in Japanese Patent No. 2,857,055. The mixture had a mass ratio of NL and MOL of NL/MOL = 85/15.

### <Example>

In a 50 mL sample bottle, 40 mL of regular gasoline (produced by JX Nippon Oil & Energy Corporation, hereinafter referred simply to "gasoline") having 10 ppm of hydrogen sulfide added thereto was charged, to which the mixture of NL and MOL obtained in Production Example was added in an amount of 1% by mass based on the total amount, and then the opening of the sample bottle was closed with a septum, followed by allowing to stand at 25°C without agitation. The gasoline was appropriately sampled and measured for the concentration of hydrogen sulfide by gas chromatography equipped with a flame photometric detector capable of selectively detecting a sulfur compound.

After confirming that the concentration of hydrogen sulfide was stabilized at 0 ppm, a polished copper sheet (length: 75 mm, width: 12.5 mm, thickness: 1.5 to 3.0 mm, produced by Nippon Testpanel Co., Ltd.) was partially immersed in the gasoline and allowed to stand at 50°C.

After three hours, the copper sheet was taken out, and subjected to a copper sheet corrosion test according to ASTM-D130. The results are shown in Table 1 and Fig. 1.

The gasoline after the copper sheet corrosion test was again measured for the concentration of hydrogen sulfide by the gas chromatography, and the concentration was confirmed to be 0 ppm.

### <Comparative Example 1>

The copper sheet corrosion test was performed under the same condition as in Example 1 except that the mixture of NL and MOL was not added, and the concentration of hydrogen sulfide was not measured. The result is shown in Table 1.

### <Comparative Example 2>

The copper sheet corrosion test was performed under the same condition as in Example 1 except that a 39% by mass glyoxal aqueous solution (produced by Tokyo Kasei Kogyo Co., Ltd.) was added in an amount of 1% by mass in terms of glyoxal based on the total amount instead of the mixture of NL and MOL added. The results are shown in Table 1 and Fig. 1.

The gasoline after the copper sheet corrosion test was again measured for the concentration of hydrogen sulfide by the gas chromatography, and the concentration was confirmed to be 0 ppm.

### <Comparative Example 3>

The copper sheet corrosion test was performed under the same condition as in Example 1 except that a 50% by mass 1,3,5-tris(2-hydroxyethyl)-hexahydro-1,3,5-triazine (MEA triazine) aqueous solution was added in an amount of 1% by mass in terms of MEA triazine based on the total amount instead of the mixture of NL and MOL added. The results are shown in Table 1 and Fig. 1.

The gasoline after the copper sheet corrosion test was again measured for the concentration of hydrogen sulfide by the gas chromatography, and the concentration was confirmed to be 0 ppm.

**Table 1**

| | Example | Comparative Example 1 | Comparative Example 2 | Comparative Example 3 |
|---|---|---|---|---|
| Corrosion rating according to ASTM-D130 | 1a | 4a | 3a | 4a |

The corrosion rating according to ASTM-D130 includes 1a, 1b, 2a, 2b, 2c, 2d, 2e, 3a, 3b, 4a, 4b, and 4c, and a larger number means severer corrosion.

In Example and Comparative Examples 2 and 3, even though the copper sheet corrosion test was performed after confirming the removal of hydrogen sulfide, the copper sheet was severely corroded in Comparative Examples 2 and 3. This suggests that an organic compound having an SH structure is newly formed in Comparative Examples 2 and 3.

### <Reference Example>

For investigating the influence of the nucleophilic agent on the corrosion of the copper sheet, the following three tests were performed in Example and Comparative Examples 2 and 3. The results are shown in Table 2.

### (1) Water Addition Test

The copper sheet corrosion test was performed in the same manner as in Example and Comparative Examples 2 and 3 except that 4 g of water was added immediately before immersing the copper sheet.

### (2) Water Removal Test

After adding the mixture of NL and MOL, the glyoxal aqueous solution, or the MEA triazine aqueous solution to the gasoline, a molecular sieve (produced by Wako Pure Chemical Industries, Ltd.) was added and allowed to stand for 18 hours, so as to dehydrate to a water content of 100 ppm or less, and then the copper sheet corrosion test was performed in the same manner as in Example and Comparative Examples 2 and 3.

### (3) Monoethanolamine (MEA) Addition Test

The copper sheet corrosion test was performed in the same manner as in Example and Comparative Examples 2 and 3 except that 50 mg of MEA was added immediately before immersing the copper sheet.

**Table 2**

| | (No treatment) | Water addition | | Water removal | MEA addition |
|---|---|---|---|---|---|
| | | Aqueous phase | Oil phase | | |
| Mixture of NL and MOL | 1a | 1a | 1a | 1a | 2d |
| Glyoxal | 3a | 4a | 3a | 1a | 4a |
| MEA triazine | 4a | 4a | 3a | 1a | 4a |

In the case where the mixture of NL and MOL was used, the corrosion of the copper sheet was suppressed in the water addition test, whereas the progress of corrosion of the copper sheet was confirmed in the MEA addition test. In the water removal test, the corrosion of all the copper sheets was suppressed.

It is understood from the results that the presence of the compound capable of acting as a nucleophilic agent strongly influences the corrosion of the copper sheet. It is considered that the reaction product of glyoxal or MEA triazine and hydrogen sulfide readily reacts with water and undergoes ring-opening reaction to form an organic compound having a thiol group. It is also considered that the reaction product of the aldehyde used in the present invention and hydrogen sulfide does not undergo ring-opening reaction even under the presence of water, but undergoes ring-opening reaction to form an organic compound having a thiol group in the presence of an amine, which is considered to act as a stronger nucleophilic agent.

According to the aforementioned results, by employing the method of the present invention instead of the method using a hexahydrotriazine compound or a certain type of an aldehyde, the further generation of a compound having an SH structure after the removal or reduction of hydrogen sulfide contained in a hydrocarbon, and metal corrosion can be more effectively suppressed.

## Claims

1. A method for suppressing metal corrosion attributable to a compound having an SH structure contained in a hydrocarbon, comprising adding at least one aldehyde selected from the group consisting of a monoaldehyde having 4 or more carbon atoms and a dialdehyde having 3 or more carbon atoms, to the hydrocarbon.

2. The method according to claim 1, wherein the aldehyde is a dialdehyde having 3 or more carbon atoms.

3. The method according to claim 1, wherein the aldehyde is at least one selected from the group consisting of 3-methylglutaraldehyde, 1,9-nonanedial, and 2-methyl-1,8-octanedial.

4. The method according to any one of claims 1 to 3, wherein the hydrocarbon is at least one selected from the group consisting of natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil.

5. The method according to any one of claims 1 to 4, wherein the compound having an SH structure is an organic compound having a thiol group.

6. Use of at least one aldehyde selected from the group consisting of a monoaldehyde having 4 or more carbon atoms and a dialdehyde having 3 or more carbon atoms, for suppressing metal corrosion attributable to a compound having an SH structure contained in a hydrocarbon.

7. The use according to claim 6, wherein the aldehyde is a dialdehyde having 3 or more carbon atoms.

8. The use according to claim 6, wherein the aldehyde is at least one selected from the group consisting of 3-methylglutaraldehyde, 1,9-nonanedial, and 2-methyl-1,8-octanedial.

9. The use according to any one of claims 6 to 8, wherein the hydrocarbon is at least one selected from the group consisting of natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil.

10. The use according to any one of claims 6 to 9, wherein the compound having an SH structure is an organic compound having a thiol group.

11. An inhibitor for metal corrosion attributable to a compound having an SH structure contained in a hydrocarbon, comprising at least one aldehyde selected from the group consisting of a monoaldehyde having 4 or more carbon atoms and a dialdehyde having 3 or more carbon atoms.

12. The inhibitor according to claim 11, wherein the aldehyde is a dialdehyde having 3 or more carbon atoms.

13. The inhibitor according to claim 11, wherein the aldehyde is at least one selected from the group consisting of 3-methylglutaraldehyde, 1,9-nonanedial, and 2-methyl-1,8-octanedial.

14. The inhibitor according to any one of claims 11 to 13, wherein the hydrocarbon is at least one selected from the group consisting of natural gas, liquefied natural gas (LNG), liquefied petroleum gas (LPG), sour gas, dry gas, wet gas, oilfield gas, associated gas, tail gas, dimethyl ether, crude oil, naphtha, heavy aromatic naphtha, gasoline, kerosene, diesel oil, gas oil, lubricant oil, heavy oil, A-type fuel oil, B-type fuel oil, C-type fuel oil, jet fuel oil, FCC slurry, asphalt, oil field condensate, bitumen, extra heavy oil, tar, gas to liquid (GTL), coal to liquid (CTL), asphaltene, aromatic hydrocarbon, alkylate, base oil, kerogen, coke, black oil, synthetic crude oil, reformulated gasoline, isomerized gasoline, recovered heavy oil, bottom oil, white oil, raffinate, wax, biomass fuel, biomass to liquid (BTL), biogasoline, bioethanol, bio-ETBE, and bio-diesel oil.

15. The inhibitor according to any one of claims 11 to 14, wherein the compound having an SH structure is an organic compound having a thiol group.
